# EUROPÄISCHE PATENTSCHRIFT

(11) **EP 1 073 579 B1**
(45) Veröffentlichungstag und Bekanntmachung des Hinweises auf die Patenterteilung: **12.06.2002**
(21) Anmeldenummer: 99915611.0
(22) Anmeldetag: 15.03.1999
(51) Int. Cl.: B62D 25/08

(54) **KAROSSERIESTRUKTUR EINES KRAFTFAHRZEUGES**
BODY STRUCTURE OF A MOTOR VEHICLE
COQUE D'UN VEHICULE AUTOMOBILE

(30) Priorität: 30.04.1998 DE 19819446
(43) Veröffentlichungstag der Anmeldung: 07.02.2001
(73) Patentinhaber: Volkswagen Aktiengesellschaft, 38436 Wolfsburg (DE)
(72) Erfinder: SIEGMUND, Axel, D-38518 Gifhorn (DE); JANDT, Thomas, D-38527 Meine (DE); WILSDORF, Simone, D-38448 Wolfsburg (DE); HILLEBRAND, Andreas, D-38528 Adenbüttel (DE)
(86) Internationale Anmeldenummer: EP9901683
(87) Internationale Veröffentlichungsnummer: WO9957002

(56) Entgegenhaltungen:
- EP-A- 0 836 983
- GB-A- 2 206 085
- US-A- 2 193 949
- US-A- 2 549 191
- US-A- 4 440 435
- US-A- 4 613 184
- US-A- 4 789 199

## Beschreibung

Die Erfindung betrifft eine Karosseriestruktur insbesondere im Bereich des Vorderwagens eines Kraftfahrzeuges gemäß Oberbegriff des Anspruches 1.

Bekannte Karosseriestrukturen im Bereich des Vorderwagens von Kraftfahrzeugen, insbesondere von Personenwagen, werden üblicherweise in Bezug auf das Crashverhalten dahingehend optimiert, daß sich ein definiertes Verformungsverhalten der den Vorderwagen bildenden Bauteile einstellt. Hierzu werden Längsträger im Vorderwagen vorgesehen, die z.B. in Höhe der Stoßstangen im wesentlichen von der Fahrzeugfrontseite nach hinten geführt werden. Im Bereich der Spritzwand zwischen Motorraum und Fahrgastraum werden diese Längsträger so gestaltet, daß sie nach unten abgekröpft sind und unterhalb des Bodens des Fahrgastraumes weiter nach hinten verlaufen. Eine derartige Gestaltung bewirkt, daß im verkröpften Knickbereich auf die Längsträger im Crashfall ein hohes Biegemoment wirkt. Diesem Biegemoment kann nur durch eine mit großem Material- und Kostenaufwand realisierte Versteifung der Knickstelle entgegengewirkt werden. Trotzdem kann es unter Umständen auch dann beim Frontalcrash immer noch zu einem Ausknicken der Längsträger nach unten kommen, wobei die Träger nur zu einem geringen Teil die Crashenergie aufnehmen.

Aus der DE 23 36 213 C2 ist es bekannt, die Längsträger als gabelförmige Baugruppe auszubilden, um z.B. bei einem Frontalcrash für eine möglichst nicht punktuell konzentrierte, sondern über größere Bereiche verteilte Lastabtragung auf den Rahmen des Fahrgastraumes zu sorgen. Nachteilig hieran ist die geometrisch komplizierte Gestaltung der Längsträger, die aufwendig herzustellen und schwierig zu montieren ist.

Ebenfalls im Bereich des Vorderwagens ist im Bereich der A-Säule und sich zwischen den A-Säulen erstreckend eine Spritzwand angeordnet, die den Motorraum gegen die Fahrgastzelle abschließt und verschiedene Durchbrüche zum Durchlaß von Funktionsbauteilen wie Lenkung etc. aufweist.

Für diese Spritzwand ist es aus der DE 44 40 973 A1 bekannt, die Spritzwand im wesentlichen aus einem Stück herzustellen und zwischen den Scharniersäulen bzw. A-Säulen anzuordnen. Durch eine etwa U-förmige Ausbildung des Spritzwandprofiles kann sich eine Versteifung der Karosserie in diesem Bereich erzielen lassen, wobei auch Aufnahmeräume für Nebenaggregate oder sonstige in diesem Bereich angeordnete Funktionsbaugruppen in dem U-förmigen Profil der Spritzwand gebildet sein können. Diese Gestaltung der Spritzwand benötigt ein großes Einbauvolumen sowie eine aufwendige Herstellung der Spritzwand an sich, um eine hinreichende Steifigkeit der Spritzwand zu gewährleisten.

Aus der DE 36 22 188 C2 ist es weiterhin bekannt, eine Verbindungskonstruktion zwischen Frontsäulen und einer Stirnwand in einem Fahrzeug zu bilden, bei der mit einer aufwendigen Blechkonstruktion eine Versteifung des Anschlußbereiches zwischen Schamiersäulen und Stimwand geschaffen wird. Die erzielbare Versteifung wird jedoch nur durch eine geometrisch komplexe, vielteilige und äußerst kostenaufwendig herzustellende Knotenblechgestaltung erreicht, die nicht wirtschaftlich umsetzbar erscheint. Auch ist durch die Ausbildung der Stirnwand als im wesentlichen blechförmiges Bauteil die Versteifungswirkung für die Karosserie nur begrenzt.

Eine weitere Einflußgröße auf die Steifigkeit des Vorderwagens ist die Ausgestaltung der Karosseriesäulen, insbesondere der A-Säulen, die als lastaufnehmende Baugruppen Belastungen aus Fahrzeugverwindungen im Betrieb, Türbetätigungen etc. unterliegen.

Neben einer üblicherweise Im wesentlichen kastenförmigen Ausgestaltung der Schamiersäule mit Profilen aus Blech ist es aus der DE 195 19 354 A1 bekannt, Träger einer Karosseriestruktur dadurch aneinander festzulegen, daß an einem der Träger wenigstens eine Aufnahme ausgebildet ist, in die ein Endbereich eines anderen Trägers formschlüssig einsetzbar ist. Hierdurch kann eine steife und hoch belastbare Verbindung zwischen den aneinandergrenzenden Trägem gebildet werden. Deren Herstellung setzt jedoch umfangreiche Umformarbeiten der durch Innenhochdruckumformen hergestellten Träger voraus.

Eine Karosseriestruktur der eingangs genannten Art ist weiterhin aus der US 4,789,199 A bekannt. Allerdings werden dort an den Längsträgem angreifende Längskräfte an den Frontsäulen vorbei in Seitenschweller der Fahrzeugbodengruppe eingeleitet, wozu ein Teil der Spritzwand mit zusätzlich anzubringenden Blechteilen eine torsionssteife Hohlstruktur ausbildet, über welche die Kräfte geführt werden.

Weiterhin ist aus der US 4,613,184 A1 wie auch aus der DE 32 23 156 A1 bekannt, die hinteren Enden von Längsträgem eines Rahmens an eine Fahrgastzelle anzuschließen, indem die Enden der Längsträger in Aufnahmeelemente an einer Begrenzungswand eingesteckt werden. Diese Längsträger werden durch weitere Längsträger der Fahrgastzelle fortgeführt.

Davon ausgehend liegt der Erfindung die Aufgabe zugrunde, eine Karosseriestruktur der eingangs erwähnten Art zu schaffen, bei der auf die Karosseriestruktur einwirkende Belastungen, also beispielsweise Kräfte bei einem Frontatcrash, sowie Belastungen im Betrieb des Fahrzeuges gleichmäßiger auf die Karosseriestruktur verteilt und dadurch die kinetische Energie besser aufgenommen werden kann. Hierbei soll insbesondere die Karosseriestruktur versteift und an die sich anschließenden Karosseriebauteile angepaßt sowie gegebenenfalls auf das Leistungsgewicht hin optimiert sein, wobei eine einfache Montierbarkeit der die Karosseriestruktur bildenden Bauteile gewährleistet sein soll.

Die Lösung dieser Aufgabe ergibt sich aus den kennzeichnenden Merkmalen des Anspruches 1 in Zusammenwirkung mit den Merkmalen des Oberbegriffes. Die Unteransprüche beschreiben bevorzugte Weiterbildungen.

Die Erfindung geht aus von einer Karosseriestruktur, insbesondere im Bereich des Vorderwagens eines Kraftfahrzeuges, aufweisend mindestens zwei Längsträger, die. sich aus dem Bereich des vorderen Fahrzeugendes in Richtung auf das hintere Fahrzeugende hin erstrecken, eine Spritzwand zum Abschluß eines Motorraumes gegenüber einem Fahrgastraum sowie zwei sich im wesentlichen vertikal und quer zu den Längsträgern erstreckende Frontsäulen. Eine derartige gattungsgemäße Karosseriestruktur wird dadurch weitergebildet, daß die Längsträger sich mit ihren zum hinteren Fahrzeugende gewandten Enden an der Spritzwand derart abstützen, daß die Längsträger jeweils mit ihrem zum hinteren Fahrzeugende gewandten Ende an einem Aufnahmeelement an der Frontseite der Spritzwand festgelegt sind, um eine im wesentlichen in der jeweiligen Längsrichtung wirkende Kraft auf die Spritzwand zu übertragen, und daß an den Frontsäulen jeweils ein Kragarm ausgebildet ist er zu der Rückseite der Spritzwand hinter den jeweiligen

Aufnahmeelement verläuft, um den jeweiligen Längsträger durch die Spritzwand hindurch abzustützen, wobei die Kraft von der Spritzwand auf die zugeordnete Frontsäule übertragbar ist.

Hierbei wird die Spritzwand als konstruktives Element eingesetzt, um Belastungen gezielt aufzunehmen und auf benachbarte Teile der Karosseriestruktur zu übertragen, so daß eine den geometrischen Verhältnissen bei der Anordnung der Längsträger Rechnung tragende Gestaltung der beiastungsübertragenden Bauteile möglich wird. Hierdurch können die Längsträger ohne große Verkröpfungen oder aufwendige Ausbildung von Knotenbereichen dort an der Spritzwand angeordnet sein und auf diese Kräfte übertragen, wo sich aufgrund der baulichen Gegebenheiten im Motorraum des Fahrzeuges die Längsträger optimal anordnen lassen.

Die Spritzwand übernimmt hierbei wesentlich die Aufnahme und Weiterleitung der Belastungen zur Frontsäule, wo sie dann an die beispielsweise einen Fahrgastraum umgebenden Karosseriestrukturen weitergeleitet wird. Hierdurch können die Belastungen z.B. bei einem Frontalcrash materialgerecht innerhalb der Karosseriestrukturen verteilt werden, wodurch der Energieabbau durch gezielte Verformungen verbessert und damit die Sicherheit der Fahrzeuginsassen erhöht wird. Auch können die Längsträger selbst wesentlich leichter und weniger stabil ausgebildet sein, da eine Belastung im wesentlichen nur noch durch Längskräfte und nicht mehr durch Biegemomente erfolgt.

In einer Weiterbildung überdeckt die Spritzwand zumindest teilweise die Karosseriestruktür zwischen den Frontsäulen und versteift diese. Hierdurch wird neben der wichtigen Funktion des Abtrennens von Motorraum und Fahrgastraum von der Spritzwand auch eine Versteifung der Karosseriestruktur zwischen den Frontsäulen ermöglicht, durch die der Fahrgastraum in seiner Frontpartie insgesamt versteift wird.

Von besonderem Vorteil ist es, wenn die Spritzwand Aufnahmeelemente zur Aufnahme des zum hinteren Fahrzeugende hinweisenden. Endes jedes Längsträgers aufweist, in denen diese Enden der Längsträger an der Spritzwand festlegbar sind. Hierdurch kann eine einfach herzustellende und immer paßgenau gewährleistete Zuordnung von Karosseriestruktur an den Fahrgastraum und den Längsträgern erreicht werden, die sogar einen kompletten Zusammenbau des Vorderwagens sowie ein erst danach erfolgendes Anflanschen des Vorderwagens an die Karosseriestruktur des Fahrgastraumes bzw. des restlichen Fahrzeuges erlaubt. Hierdurch wird ein modulartiges Zusammenbauen der Fahrzeugkarosserie ermöglicht.

In Weiterbildung können die Aufnahmeelemente die zum hinteren Fahrzeugende hinweisenden Enden der Längsträger formschlüssig aufnehmen. Eine formschlüssige Ausbildung der Aufnahmeelemente verbindet die Vorteile einer beispielsweise durch Einstecken oder Aufstecken einfach vorzunehmenden Fügeoperation mit der Genauigkeit der Zuordnung von Längsträgern und Spritzwand. Eine Festlegung der zum hinteren Fahrzeugende hinweisenden Enden jedes Längsträgers an oder in den Aufnahmeelementen der Spritzwand kann in weiterer Ausgestaltung vorteilhaft durch Verkleben, Verschrauben, Verschweißen und/oder dgl. erfolgen, wobei selbstverständlich alle anderen, beispielsweise im Karosseriebau häufig eingesetzten Fügetechniken ebenfalls einzeln oder in Kombination miteinander Verwendung finden können.

Die besonderen Anforderungen einer auch konstruktiv bedingte Belastungen aufnehmenden Spritzwänd lassen sich besonders gut erfüllen, wenn die Spritzwand als Gußbauteil, vorzugsweise aus einer Aluminium- oder Magnesium-Legierung, gebildet ist. Hierdurch kann gezielt in hoch belasteten Bereichen Material fertigungstechnisch einfach vorgesehen werden. Bezüglich der Forderung nach einen geringen Leistungsgewicht kann einer derartige gegossene Spritzwand aus einer Aluminium- oder Magnesium-Legierung hergestellt werden, die leichter als vergleichbare sonst übliche Werkstoffe aus der Karosseriefertigung wie z.B. Stahl gehalten werden kann.

Fertigungstechnisch und belastungsgerecht günstig ist es, wenn die Aufnahmeelemente für die zum hinteren Fahrzeugende hinweisenden Enden jedes Längsträgers beim Gießen der Spritzwand einstückig an der Spritzwand angeformt und vorzugsweise zum Fahrgastraum hin geschlossen sind. Hierdurch können die Vorteile der Gußverfahren genutzt werden, wobei z.B. durch eine adapterförmige Ausgestaltung der Aufnahmeelemente ein einfaches Fügen von Längsträgern und Spritzwand gewährleistet wird. Ein seitens des Fahrgastraumes geschlossenes Ausbilden der Aufnahmeelemente erlaubt eine dichte Trennung von Fahrgastraum und Motorraum.

In einer anderen Ausgestaltung kann die Spritzwand auch als Blechbauteil, vorzugsweise aus einem Aluminium-Blechprofil, ausgebildet sein, wobei selbstverständlich alle bekannten Blechbearbeitungsverfahren eingesetzt werden können. Ein Verwenden von Leichtmetallblechen wie z.B. Aluminiumblechen sorgt für ein geringes Bauteilgewicht.

Ebenfalls ist es denkbar, ein an die Spritzwand angrenzendes Radhaus ganz oder zumindest teilweise einstückig mit der Spritzwand auszubilden, wodurch sich großflächige und einfach zu montierende Karosseriekomponenten ergeben.

Fertigungstechnisch einfach und günstig ist es, wenn die Spritzwand aus zwei im wesentlichen symmetrischen, etwa im Bereich des Mitteltunnels geteilten Halbelementen gebildet ist, die im Bereich des Mitteltunnels aneinander festlegbar sind. Hierdurch wird vermieden, in einem einzigen Fertigungsschritt nahezu eine sich über die ganze Fahrzeugbreite erstreckende Spritzwand herstellen zu müssen, die sperrig zu montieren und fertigungstechnisch aufwendig herzustellen sind. Hierbei können in weiterer Ausgestaltung die Halbelemente der Spritzwand aneinander und an angrenzenden Teilen der Karosseriestruktur lösbar festlegbar sein, wodurch eine Versteifung der an die Spritzwand angrenzenden Bauteile der Karosseriestruktur bewirkt wird.

Von besonderem Vorteil ist es, wenn die Spritzwand Anschlußelemente zur Festlegung eines zur Anbringung von Fahrwerkskomponenten dienenden Hilfsrahmens aufweist. Derartige Hilfsrahmen dienen zur Anbringung und Abstützung von Fahrwerkskomponenten und erstrecken sich üblicherweise zwischen den Längsträgem quer zur Fahrtrichtung des Fahrzeuges. Aufgrund der konstruktiven Auslegung der Spritzwand können diese Hilfsrahmen einfach und in der Nähe auf sie einwirkender Belastungen an der Spritzwand festgelegt werden, so daß zusätzliche Befestigungspunkte an anderen Karosserieteilen oder lange Auskragungen der Hilfsrahmen vermeidbar sind. Derartige, an der Spritzwand angeordnete Anschlußelemente können konsolenartig ausgebildet und der Hilfsrahmen daran vorzugsweise lösbar festlegbar sein, wobei in weiterer Ausgestaltung die Anschlußelemente im Bereich der unteren Kante der Spritzwand und damit nahe der am den Hilfsrahmen festzulegenden Fahrwerkskomponenten ausgebildet sein können. Besonders vorteilhaft ist es weiterhin, wenn entsprechend den Aufnahmeelementen für die Längsträger die konsolenartigen Anschlußelemente einstückig beim Gießen der als Gußteil ausgebildeten Spritzwand an dieser angeformt sind. Auch ist es denkbar, daß z.B. zur Gewichtsreduzierung der Hilfsrahmen als Magnesium-Gußbauteil ausbildbar ist.

Eine besonders leichtgewichtige und belastungsgerechte Ausbildung der Karosseriestruktur läßt sich weiterhin dadurch erreichen, daß die Frontsäule als ein im wesentlichen in Fahrtrichtung längserstreckt geöffnetes, U-förmiges Profil ausgebildet ist. Ein derartiges U-Profil kann einfach, z.B. auch durch Blechverarbeitungsverfahren hergestellt werden, wobei durch entsprechende Auslegung von Wandstärken die prinzipiell nicht besonders hohe Biege- und Torsionssteifigkeit offener Profile beeinflußt werden kann.

Von besonderem Vorteil ist es, wenn die Frontsäule aus einer Magnesium- oder Aluminium-Gußlegierung, vorzugsweise einer Druckgußlegierung hergestellt ist. Hierdurch kann durch gezielte und gußtechnisch einfach zu realisierende Materialanhäufungen eine Anpassung des Profilquerschnitts an auftretende Belastungen erfolgen.

Eine weitere der Versteifung des Profiles dienende Gestaltung kann dadurch erreicht werden, daß das U-förmige Profil der Frontsäule innenliegende Verrippungen, vorzugsweise Kreuzverrippungen aufweist. Hierdurch werden die Wandungen des Profiles gegenseitig abgestützt, wobei durch die Gußherstellung keine wesentlichen Ausformprobleme auftreten. Derartige Verrippungen können selbstverständlich auch außenseitig der Frontsäule angeordnet sein, um z.B. eine Verstärkung der hier üblicherweise vorgenommenen Türscharnieranbindung zu bewirken.

Zur weiteren Verbesserung der Lastaufnahme der Karosseriestruktur trägt bei, wenn jede Frontsäule einen zum zugeordneten Aufnahmeelement der Spritzwand für den zugeordneten Längsträger hin weisenden, konsolenartigen Kragarm aufweist, der durch den Längsträger in die Spritzwand eingeleitete Kräfte aufnimmt und in die Frontsäule einleitet. Hierdurch kann die Spritzwand gezielt in dem Bereich, in dem die Längsträger die Spritzwand in ihrer Längsrichtung belasten, eine weitere Abstützung der Spritzwand vorgenommen werden, so daß sich auch eine Lastaufteilung zwischen Spritzwand und konsolenartigem Kragarm einstellen kann. Der konsolenartige Kragarm ist vorteilhaft direkt an der Frontsäule ausgebildet oder an ihm angeordnet, so daß die Lastübertragung über den Kragarm direkt und ohne Verformung der Spritzwand erfolgen kann.

In weiterer Ausgestaltung kann der konsolenartige Kragarm in Verlängerung der Längsträger hinter der Spritzwand an der fahrgastraumseitigen Fläche der Spritzwand zumindest anliegen und das Aufnahmeelement der Spritzwand abstützen. Hierdurch muß keine notwendige Verbindung zwischen Spritzwand und Kragarm hergestellt werden, es reicht eine einfache Abstützung der Kragarmes auf der Rückseite der Spritzwand.

In einer anderen Ausgestaltung kann der konsolenartige Kragarm auch direkt in oder an dem zum hinteren Fahrzeugende hinweisenden Ende des zugeordneten Längsträgers festlegbar sein. Hierdurch wird eine auch biegesteife und gegenüber Relatiwerschiebungen belastbare Verbindung zwischen Kragarm und Längsträger möglich.

Zur Verbesserung der Belastbarkeit des Kragarmes kann dieser aus einem Hohlprofil gebildet sein und eine innenliegende Verrippung aufweisen, die sich vorzugsweise bis in das Innere der Frontsäule erstreckt. Hierdurch wird eine Leichtbauweise möglich, die ohne Verringerung der Steifigkeit und Festigkeit des Kragarmes erzielbar ist.

Von besonderem Vorteil für die Steifigkeit und Belastbarkeit der Karosseriestruktur ist es, wenn die Spritzwand derart jeder Frontsäule zugeordnet ist, daß stimseitige Bereiche der Spritzwand zumindest die U-förmige Öffnung der Frontsäule überdecken und an der Frontsäule derart festgelegt sind, daß der Verbund aus offenem Profil der Frontsäule und stimseitigen Bereichen der Spritzwand ein geschlossenes, torsions- und biegesteifes Hohlprofil bilden. Hierdurch wird zum einen das Innere des Hohlprofiles belastungsgerecht gestaltbar und gußtechnisch herstellbar, zum anderen läßt sich durch die deckelartige Abdeckung des offenen Profiles durch die Endbereiche der Spritzwand oder auch weitere, von der Spritzwand getrennte Bauteile eine den üblichen kastenförmig geschlossenen Profilen vergleichbare Steifigkeit erzielt. Dies ermöglicht eine noch belastungsgerechtere Gestaltung der Frontsäule, als dies bei anderen Herstellverfahren wie z.B. dem Innenhochdruckumformen nur mit aufwendigen Fertigungstechniken überhaupt erreichbar ist.

Für den Anschluß der Karosseriestruktur an der Übergangsstelle zwischen Vorderwagen und Fahrgastraum ist es besonders günstig, wenn die Frontsäule an ihrem, einem Schweller zugeordneten Abschnitt einen Einsteckbereich aufweist, in den der Schweller einsteckbar und danach durch geeignete Fertigungsverfahren festlegbar ist. Hierdurch ist das modulartige Zusammenstecken von Einzelkomponenten mit anschließendem dauerhaften Fügen auch auf die Bereiche der Frontsäule übertragbar, die den hinteren Partien des Fahrzeuges zugeordnet sind.

Eine besonders vorteilhafte Ausbildung der erfindungsgemäßen Karosseriestruktur zeigt die Zeichnung.

Es zeigt:
- Fig. 1: eine isometrische Ansicht der erfindungsgemäßem Karosseriestruktur von vorne seitlich und etwas außerhalb der Karosserie
- Fig. 2: eine Draufsicht auf die Karosseriestruktur gemäß Figur 1
- Fig. 3: die Frontsäule gemäß Figur 1 mit daran angeordnetem Kragarm in einer Einzeldarstellung
- Fig. 4: eine Gesamtansicht der Spritzwand entsprechend der Erfindung in einer isometrischen Ansicht von innerhalb des Fahrgastraumes
- Fig. 5a, 5b: eine Spritzwand gemäß der Erfindung in einer teilweisen Draufsicht sowie in einer verkleinerten Gesamt-Draufsicht

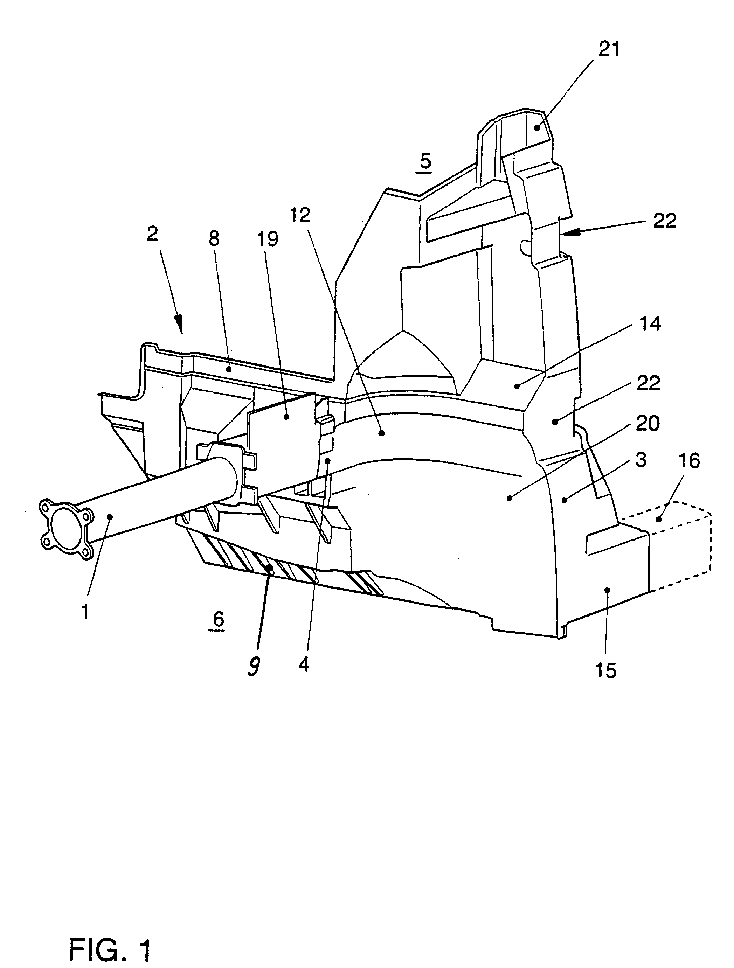

In der Figur 1 ist in einer Gesamtansicht in isometrischer Darstellung eine erfindungsgemäße Karosseriestruktur dargestellt, wobei alle die Karosseriestruktur bildenden Bauteile im montierten Zustand gezeigt sind. Hierbei ist etwa nur eine Hälfte der Karosseriestruktur gezeigt, die an einer Seite einer Karosserie etwa im Bereich der Frontsäule 3 angeordnet ist. Eine etwa symmetrische Ausbildung des nicht sichtbar dargestellten Teils der Karosseriestruktur ist für den Fachmann selbstverständlich mit offenbart.

Die Karosseriestruktur gemäß Figur 1 ist etwa im Bereich einer Frontsäule 3 vorgesehen, die die in Fahrtrichtung des Fahrzeuges vordere Säule in einer nicht weiter dargestellten Dachstruktur bildet. Das Fahrzeug an sich ist in dieser Figur nicht erkennbar. Die in Figur 1 erkennbare Karosseriestruktur erstreckt sich mit der symmetrisch ausgebildeten Gegenseite etwa horizontal unterhalb der nicht dargestellten Frontscheibe z. B. eines Personenkraftwagens und in Fahrtrichtung gesehen vor dem ebenfalls nicht dargestellten Armaturenbrett.

Die Karosseriestruktur wird gebildet aus einer Spritzwand 2, die aus in etwa symmetrischen Halbelementen 8 besteht und die den Motorraum 6 von dem Fahrgastraum 5 im wesentlichen abtrennt. Diese Spritzwand 2 weist verschiedene Durchbrüche, Verrippungen etc. auf, die in diesem Zusammenhang nicht weiter interessant sind und beispielsweise für den Durchtritt von Funktionselementen wie etwa der Lenkung etc. dienen. In Fahrtrichtung vor der Spritzwand 2 und in nicht näher erkennbarer Weise im Motorraum 6 der Fahrzeuges angeordnet befindet sich ein Längsträger 1, der sich etwa parallel zur Fahrtrichtung erstreckt und hier als im wesentlichen rohrförmiges Bauteil ausgebildet ist. Dieser Längsträger 1 hat unter anderem die Aufgabe, bei einem mit Längsbelastungen einhergehenden Unfall, beispielsweise einem Frontalcrash oder dgl., einen Teil der Aufprallenergie aufzunehmen und in Verformungsarbeit umzusetzen. Weiterhin soll er die nicht durch seine Verformung abbaubare Aufprallenergie so an die in Fahrtrichtung weiter hinten liegende Karosseriestruktur weitergeben, daß diese aufgenommen und für den Fahrzeuginsassen möglichst unschädlich abgebaut wird. Hierzu ist der Längsträger 1 gemäß der vorliegenden Erfindung an seinem hinteren Endbereich 19 in ein Aufnahmeelement 4 eingesteckt, welches an der Spritzwand 2 in noch näher erläuterter Weise vorgesehen ist. Somit überträgt der Längsträger 1 bei einem Frontalcrash oder dgl. einen Teil der Aufprallenergie auf die Spritzwand 2, die in dieser Ausführungsform als Magnesiumgußteil ausgestaltet ist. Die Spritzwand 2 ist dabei als bewußt konstruktiv durch Kräfte bei einem Aufprall belastbares Bauteil ausgelegt, das nicht nur reine Abtrennfunktionen, sondern auch Versteifungs- und Festigkeitsfunktionen übernimmt.

Die Spritzwand 2, die beispielsweise durch einen Frontalcrash von dem Längsträger 1 belastet wird, überträgt ihrerseits die Belastung wieder weiter auf die Frontsäule 3, die Bestandteil der den Fahrgastraum 5 umgebenden Karosseriestruktur ist und damit etwa eine geschlossenen Rahmen bildet. Ebenfalls Teil dieses Rahmens ist der nur andeutungsweise dargestellte Schweller 16, der etwa im Bereich des Fußraumes die untere seitliche Begrenzung des Fahrgastraumes 5 bildet.

Die Frontsäule 3 ist eine im wesentlichen senkrecht angeordnete Tragstruktur, die neben dem noch näher erläuterten Einsteckbereich 15 für den Schweller 16 auch noch Anlenkbereiche in Form von Befestigungspositionen 22 für nicht weiter dargestellte Türscharniere z.B. einer Fahrertür aufweist. Ebenfalls kann oberhalb der Frontsäule 3 in einem Einsteckbereich 21 ein nicht dargestellter Dachholm vorgesehen werden, der mit anderen Dachholmen das Dach des Fahrzeuges trägt.

Der Längsträger 1 ist mit seinem hinteren Ende 19 in ein Aufnahmeelement 4 eingesteckt und über dieses Aufnahmeelement 4 an der Spritzwand 2 festgelegt. In Fahrtrichtung hinter und seitlich außerhalb ist ein noch später erläuterter Kragarm 12 angeordnet, der gemeinsam mit dem plattenartig ausgebildeten Überlappungsbereich 14 zwischen dem stirnseitigen Ende der Spritzwand 2 und der Frontsäule 3 für die Übertragung von durch den Längsträger 1 übertragenen Belastungen auf die Frontsäule 3 beiträgt.

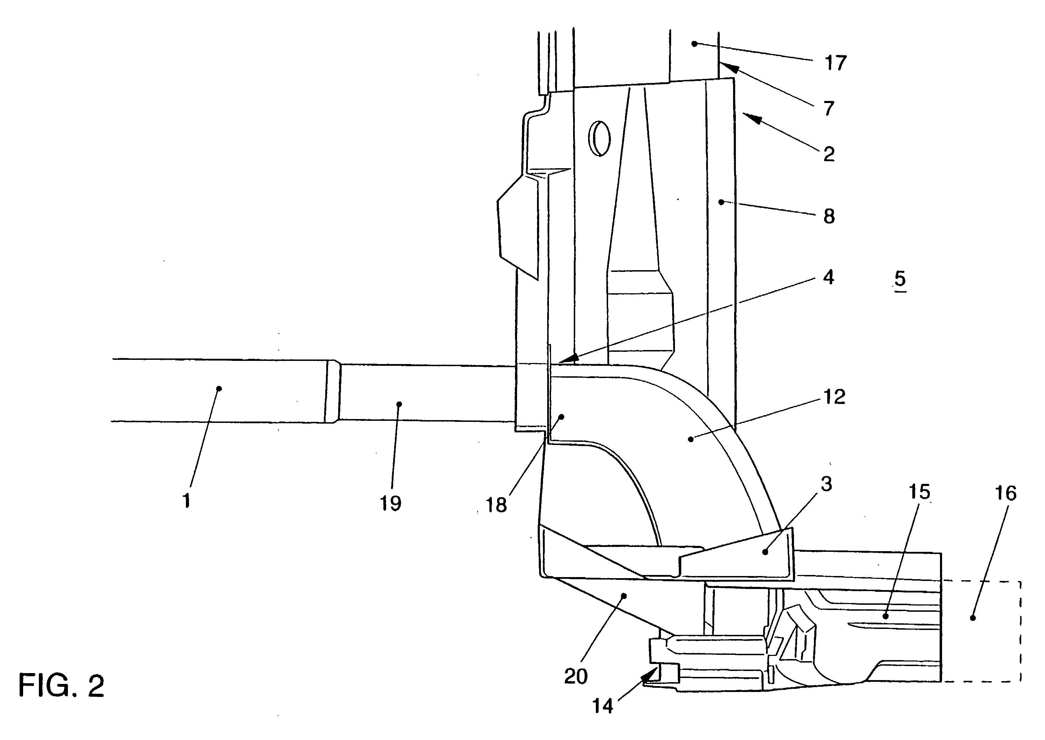

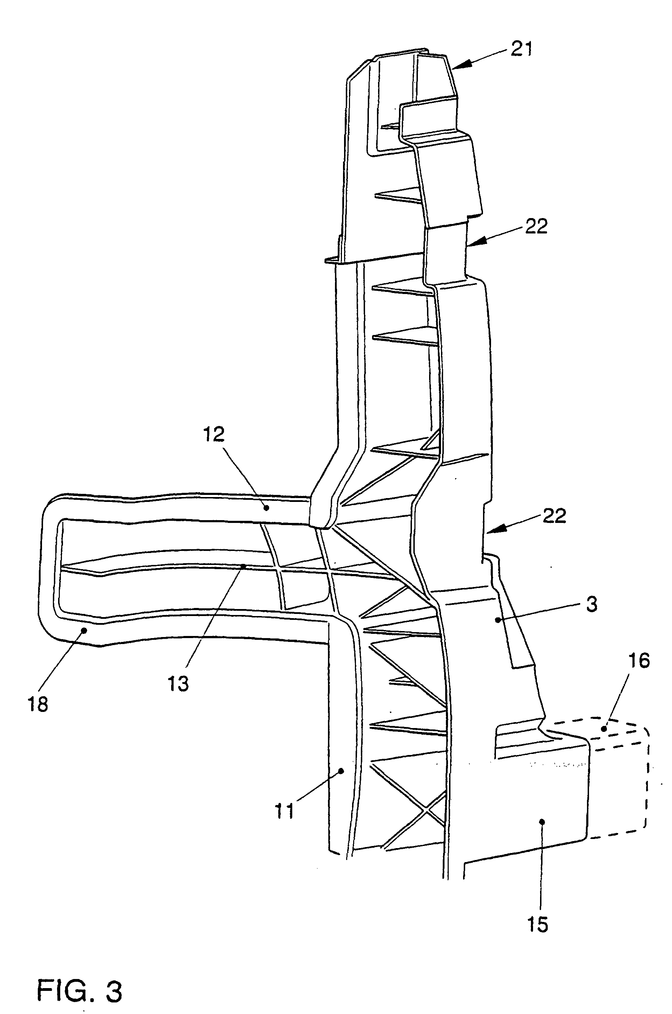

Die Anordnung und das Zusammenwirken der Teile der erfindungsgemäßen Karosseriestruktur wird besonders gut anhand der Figur 2 erkennbar, die eine Draufsicht auf eine Hälfte der Karosseriestruktur gemäß der Figur 1 darstellt. Man erkennt den Längsträger 1, der mit seinem Endbereich 19 in ein Aufnahmeelement 4 der Spritzwand 2 eingesteckt und dort beispielsweise lösbar oder auch unlösbar festgelegt ist. Das Aufnahmeelement 4 ist hierbei einstückig mit der Spritzwand 2 verbunden und bildet adapterartig eine formschlüssig mit dem Ende 19 des Längsträgers 1 zusammenwirkendes Steckgesicht. Auf der Seite des Fahrgastraumes 5 ist ein in der Draufsicht etwa halbkreisförmig gebogener Kragarm 12 in Form eines noch in Figur 3 besser erkennbaren Hohlquerschnittes angeordnet, der von der Rückseite der Spritzwand 2 zur Frontsäule 3 verläuft. Wie in der zugehörigen Figur 3 zu erkennen, ist der Kragarm 12 an der Frontsäule 3 angeformt und bildet ein etwa rinnenförmiges Profil mit seitlichen Abwinklungen zur Versteifung. Ebenfalls zur Versteifung dient eine innenliegend der rinnenförmigen Vertiefung angeordnete Verrippung 13, die von dem der Spritzwand 2 zugeordneten Bereich bis in das Innere der ebenfalls als Hohlprofil ausgebildeten Frontsäule 3 reicht. Hierdurch ist bei Belastungen der Spritzwand 2 durch den Längsträger 1 beispielsweise durch einen Frontalcrash dafür gesorgt, daß heben der Übertragung der Belastung mittels des noch näher erläuterten Überlappungsbereiches 14 im wesentlichen die Belastung über den Kragarm 12 auf die Frontsäule 3 übertragen wird.

Die Spritzwand 2 erstreckt sich in Richtung auf die Fahrzeugmittelebene etwa bis zu einer Teilungsebene 17, in der ein Halbelement 8 der Spritzwand 2 etwa im Bereich des Mitteltunnels 7 an ein entsprechendes symmetrisches Halbelement 8 angrenzt und mit diesem beispielsweise durch lösbare Verbindungen aneinander festgelegt ist. Ebenfalls können diese Halbelemente 8 an weiteren, nicht näher dargestellten Karosseriebauteilen festgelegt sein.

An dem dieser Teilungsebene 17 abgewandten Ende der Spritzwand 2 erstreckt sich die Spritzwand 2 noch einen Abschnitt über das Ende des Kragarmes 12 hinaus und bildet einen entsprechend geformten Überlappungsbereich 14, der mit entsprechenden Gegenformen der Frontsäule 3 zusammenwirkt. Zum einen hat dieser Überlappungsbereich 14 die Aufgabe, die Spritzwand 2 an der Frontsäule 3 bei Belastungen in Längsrichtung des Längsträgers 1 abzustützen. Darüber hinaus dient dieser Überlappungsbereich 14 aber auch zur Versteifung der Frontsäule 3, die als im wesentlichen U-förmig längserstreckt offenes Profil ausgebildet ist. Neben einer Versteifung durch innenliegende Verrippungen 11 bilden hierbei der Überlappungsbereich 14 und das offene Profil der Frontsäule 3 zwei aneinander festgelegte Teile, die aus dem offenen U-Pröfil der Frontsäule 3 ein geschlossenes und damit ungleich belastbareres Hohlprofil machen. Gleichzeitig kann durch die Leichtbauweise gegenüber einem massiven geschlossenen Profil Material und damit Gewicht eingespart werden. Die Herstellung kann dabei im Verhältnis zu den erforderlichen Verfahren bei geschlossenen Profilen mit relativ einfachen Fertigungsverfahren erfolgen.

An dem dem Schweller 16 zugewandten Ende der Frontsäule 3 ist in analoger Weise zu den Aufnahmelementen 4 für den Längsträger 1 ein Einsteckbereich 15 für den Schweller 16 ausgebildet, in den der Schweller 16 eingesteckt und z.B. durch bekannte Fügeverfahren festgelegt werden kann. Somit bildet die erfindungsgemäße Karosseriestruktur einen einfach in einen den Fahrgastraum 5 umgebenden Rahmen integrierbare Montageeinheit, die aufgrund des günstigen Kraftflusses z.B. bei einem Frontalcrash eine hohe Belastung erträgt.

Auf der dem Motorraum 6 zugewandten Seite der Spritzwand 2 sind konsolenartige Anschlußelemente 9 für einen nicht weiter dargestellten Hilfsrahmen zu erkennen, an dem wiederum ebenfalls nicht dargestellte Fahrwerkskomponenten montierbar sind. Dieser Hilfsrahmen wird an verschiedenen Punkten der Karosserie befestigt, um eine möglichst sichere Aufnahme der Fahrwerkskomponenten zu ermöglichen. Durch die konstruktiv belastbar ausgelegte Gestaltung der Spritzwand 2 können diese konsolenartigen Anschlußelemente 9 an besonders günstiger Stelle der Karosserie angeordnet werden und tragen daher zur Verringerung von Verwindungen aufgrund von Fahrwerksbelastungen bei.

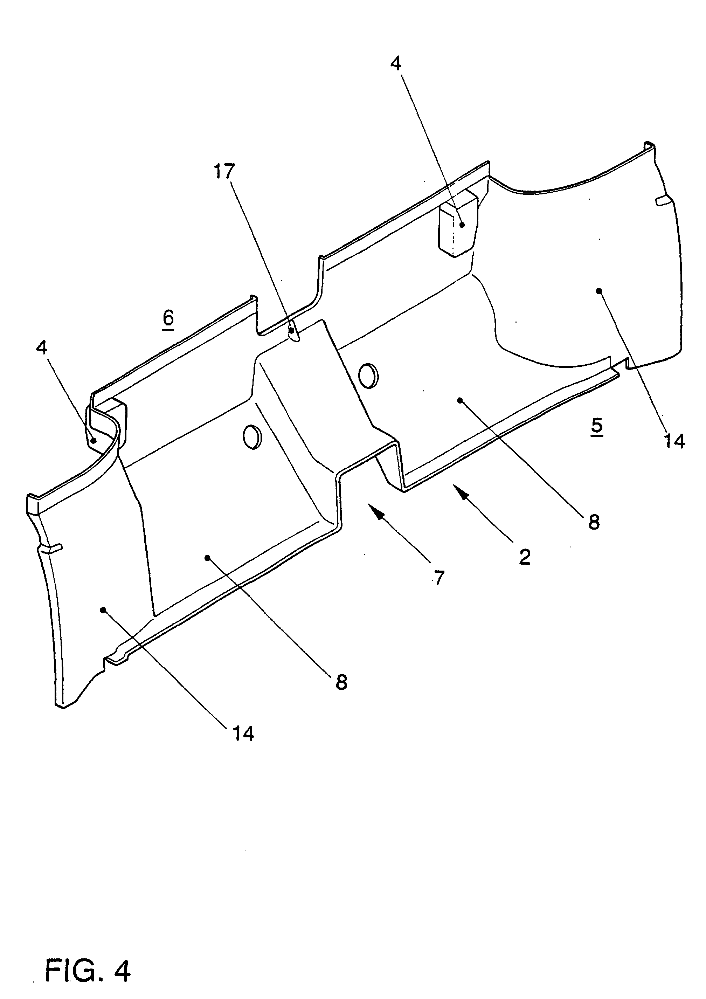

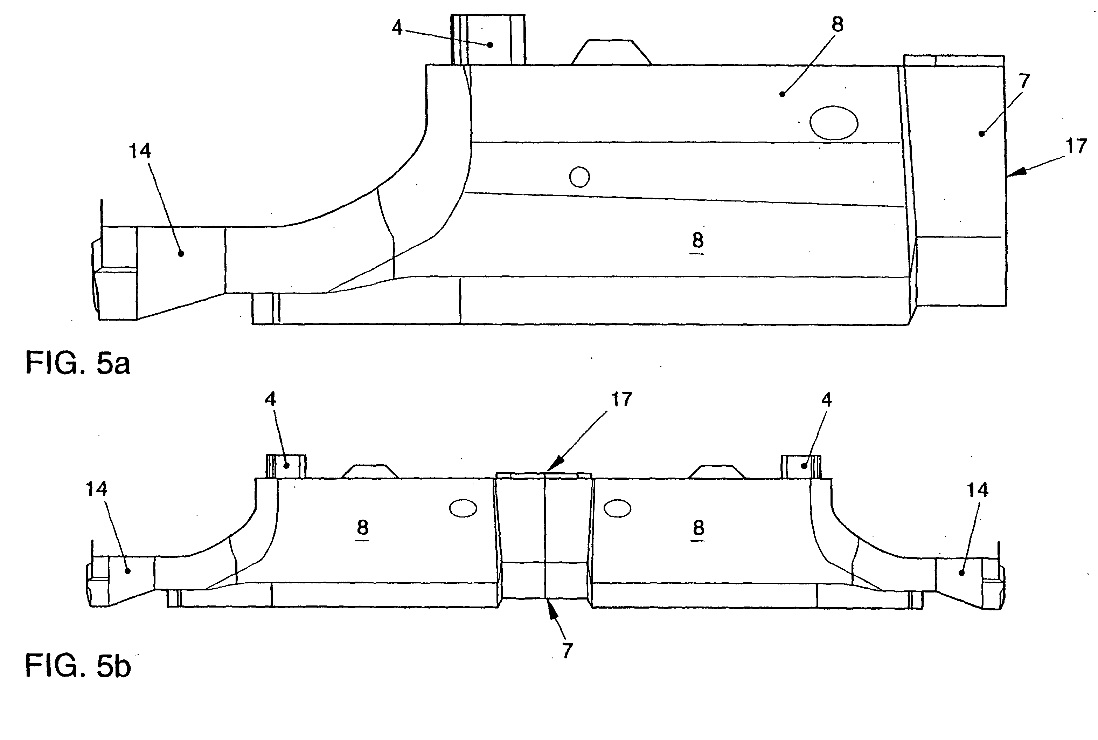

Unter Bezugnahme auf die Figuren 4 sowie 5a und 5b wird ein Ausführungsbeispiel für eine Spritzwand 2 erläutert. Hierbei ist die Spritzwand 2 in der Figur 4 in isometrischer Darstellung und in den Figuren 5a und 5b jeweils in einer Draufsicht dargestellt, wobei die Figur 5a eine vergrößerte Draufsicht auf ein Halbelement 8 der Spritzwand 2 ist.

Außenliegend im Stirnbereich der Spritzwand 2 sind die Überlappungsbereiche 14 zum Abschluß der hier nicht erkennbaren Frontsäule 3 zu sehen. Obenliegend sind die Aufnahmeelemente 4 für die Enden 19 der Längsträger 1 angedeutet. Ebenfalls ist die Teilungsebene 17 zu erkennen, die im Bereich des Mitteltunnels 7 die beiden Halbelemente 8 der Spritzwand 2 voneinander trennt. Motorraumseitig sind wiederum die konsolenartigen Anschlußelemente 9 für den nicht dargestellten Hilfsrahmen zu erkennen.

Von besonderem Vorteil ist bei der vorliegenden Karosseriestruktur, wenn einzelne oder alle Komponenten aus einer Leichtmetallegierung, beispielsweise einer Magnesiumlegierung hergestellt sind, wobei insbesondere aufgrund der notwendigen hohen Belastbarkeit gerade auch der Spritzwand 2 einer Herstellung mittels Gießverfahren in Frage kommt. Hierdurch können die Aufnahmeelemente 4 sowie die konsolenartigen Anschlußelemente 9 einstückig und belastungsgerecht in die Spritzwand 2 integriert werden.

### BEZUGSZEICHENLISTE

- 1: Längsträger
- 2: Spritzwand
- 3: Frontsäule
- 4: Aufnahmeelemente
- 5: Fahrgastraum
- 6: Motorraum
- 7: Bereich am Mitteltunnel
- 8: Halbelement Spritzwand
- 9: konsolenartige Anschlußelemente für Hilfsrahmen
- 10: Profil Frontsäule
- 11: Verrippung Frontsäule
- 12: Kragarm
- 13: Verrippung Kragarm
- 14: Überlappungsbereich
- 15: Einsteckbereich für Schweller
- 16: Schweller
- 17: Teilungsebene
- 18: Auflagefläche
- 19: hinterer Endbereich Längsträger
- 20: Deckelplatte
- 21: Einsteckbereich für Dachholm
- 22: Befestigungsposition Türscharnier

## Patentansprüche

1. Karosseriestruktur, insbesondere im Bereich des Vorderwagens eines Kraftfahrzeuges, aufweisend mindestens zwei Längsträger (1), die sich aus dem Bereich des vorderen Fahrzeugendes in Richtung auf das hintere Fahrzeugende hin erstrecken, eine Spritzwand (2) zum Abschluß eines Motorraumes (6) gegenüber einem Fahrgastraum (5) sowie zwei sich im wesentlichen vertikal und quer zu den Längsträgem (1) erstreckende Frontsäulen (3), **dadurch gekennzeichnet, daß** die Längsträger (1) jeweils mit ihrem zum hinteren Fahrzeugende gewandten Ende (19) an einem Aufnahmeelement (4) an der Frontseite der Spritzwand (2) festgelegt sind, um eine im wesentlichen in der jeweiligen Längsrichtung wirkende Kraft auf die Spritzwand (2) zu übertragen, und daß an den Frontsäulen (3) jeweils ein Kragarm (12) ausgebildet ist, der zu der Rückseite der Spritzwand hinter den jeweiligen Aufnahmeelement (4) verläuft, um den jeweiligen Längsträger (1) durch die Spritzwand (2) hindurch abzustützen, wobei die Kraft von der Spritzwand (2) auf die zugeordnete Frontsäule (3) übertragbar ist.

2. Karosseriestruktur nach Anspruch 1, **dadurch gekennzeichnet, daß** die Spritzwand (2) die Karosseriestruktur zwischen den Frontsäulen (3) versteifend zumindest teilweise überdeckt

3. Karosseriestruktur nach einem der Ansprüche 1 oder 2, **dadurch gekennzeichnet, daß** die zum hinteren Fahrzeugende hin weisenden Enden (19) jedes Längsträgers (1) in den Aufnahmeelementen (4) aufgenommen sind.

4. Karosseriestruktur nach Anspruch 3, **dadurch gekennzeichnet, daß** die Aufnahmeelemente (4) die zum hinteren Fahrzeugende hinweisenden Enden (19) der Längsträger (1) formschlüssig aufnehmen.

5. Karosseriestruktur nach einem der Ansprüche 3 oder 4, **dadurch gekennzeichnet, daß** die zum hinteren Fahrzeugende hinweisenden Enden (19) jedes Längsträgers (1) an oder in den Aufnahmeelementen (4) der Spritzwand (2) durch Verkleben, Verschrauben, Verschweißen und/oder dgl. festlegbar sind.

6. Karosseriestruktur nach einem der vorstehenden Ansprüche, **dadurch gekennzeichnet, daß** die Spritzwand (2) als Gußbauteil, vorzugsweise aus einer Aluminium- und/oder Magnesium-Legierung, gebildet ist.

7. Karosseriestruktur nach einem der vorstehenden Ansprüche, **dadurch gekennzeichnet, daß** die Aufnahmeelemente (4) für die zum hinteren Fahrzeugende hinweisenden Enden (19) jedes Längsträgers (1) beim Gießen der Spritzwand (2) einstückig an der Spritzwand (2) angeformt und vorzugsweise zum Fahrgastraum (5) hin geschlossen sind.

8. Karosseriestruktur nach einem der Ansprüche 1 bis 5, **dadurch gekennzeichnet, daß** die Spritzwand (2) als Blechbauteil, vorzugsweise aus einem Aluminium-Blechprofil, ausgebildet ist.

9. Karosseriestruktur nach einem der vorstehenden Ansprüche, **dadurch gekennzeichnet, daß** ein an die Spritzwand (2) angrenzendes Radhaus ganz oder teilweise einstückig mit der Spritzwand (2) ausbildbar ist.

10. Karosseriestruktur nach einem der vorstehenden Ansprüche, **dadurch gekennzeichnet, daß** die Spritzwand (2) aus zwei im wesentlichen symmetrischen, etwa im Bereich des Mitteltunnels (7) geteilten Halbelementen (8) gebildet ist, die im Bereich des Mitteltunnels (7) aneinander festlegbar sind.

11. Karosseriestruktur nach Anspruch 10, **dadurch gekennzeichnet, daß** die Halbelemente (8) aneinander und an angrenzenden Teilen der Karosseriestruktur lösbar festlegbar sind.

12. Karosseriestruktur nach einem der vorstehenden Ansprüche, **dadurch gekennzeichnet, daß** die Spritzwand (2) Anschlußelemente (9) zur Festlegung eines zur Anbringung von Fahrwerkskomponenten dienenden Hilfsrahmens aufweist.

13. Karosseriestruktur nach Anspruch 12, **dadurch gekennzeichnet, daß** die Anschlußelemente (9) konsolenartig ausgebildet und der Hilfsrahmen daran vorzugsweise lösbar festlegbar ist.

14. Karosseriestruktur nach einem der Ansprüche 12 oder 13, **dadurch gekennzeichnet, daß** die Anschlußelemente (9) im Bereich der unteren Kante der Spritzwand (2) ausgebildet ist.

15. Karosseriestruktur nach einem der Ansprüche 6 oder einem der Ansprüche 12 bis 14, **dadurch gekennzeichnet, daß** die konsolenartigen Anschlußelemente (9) einstückig beim Gießen der als Gußteil ausgebildeten Spritzwand (2) an dieser angeformt sind.

16. Karosseriestruktur nach einem der Ansprüche 12 oder 13, **dadurch gekennzeichnet, daß** der Hilfsrahmen als Magnesium-Gußbauteil ausbildbar ist.

17. Karosseriestruktur nach einem der vorstehenden Ansprüche, **dadurch gekennzeichnet, daß** die Frontsäule (3) als ein im wesentlichen in Fahrtrichtung längserstreckt geöffnetes, U-förmiges Profil ausgebildet ist.

18. Karosseriestruktur nach Anspruch 17, **dadurch gekennzeichnet, daß** die Frontsäule (3) aus einer Magnesium- oder Aluminium-Gußlegierung, vorzugsweise einer Druckgußlegierung hergestellt ist.

19. Karosseriestruktur nach einem der Ansprüche 17 oder 18, **dadurch gekennzeichnet, daß** das U-förmige Profil der Frontsäule (3) zur Versteifung innenliegende Verrippungen (11), vorzugsweise Kreuzverrippungen aufweist.

20. Karosseriestruktur nach einem der Ansprüche 3, 4 oder einem der Ansprüche 17 bis 19, **dadurch gekennzeichnet, daß** jede Frontsäule (3) einen zum zugeordneten Aufnahmeelement (4) der Spritzwand (2) für den zugeordneten Längsträger (1) hin weisenden, konsolenartigen Kragarm (12) aufweist, der durch den Längsträger (1) in die Spritzwand (2) eingeleitete Kräfte aufnimmt und in die Frontsäule (3) einleitet.

21. Karosseriestruktur nach Anspruch 20, **dadurch gekennzeichnet, daß** der konsolenartige Kragarm (12) in Verlängerung der Längsträger (1) hinter der Spritzwand (2) an der fahrgastraumseitigen Fläche der Spritzwand (2) zumindest anliegt und das Aufnahmeelement (4) der Spritzwand (2) abstützt.

22. Karosseriestruktur nach Anspruch 20, **dadurch gekennzeichnet, daß** der konsolenartige Kragarm (12) auch direkt an dem zum hinteren Fahrzeugende hinweisenden Ende (19) des zugeordneten Längsträgers (1) festlegbar ist.

23. Karosseriestruktur nach einem der Ansprüche 20 bis 22, **dadurch gekennzeichnet, daß** der konsolenartige Kragarm (12) aus einem Hohlprofil gebildet ist und eine innenliegende Verrippung (13) aufweist, die sich vorzugsweise bis in das Innere der Frontsäule (3) erstreckt.

24. Karosseriestruktur nach einem der vorstehenden Ansprüche, **dadurch gekennzeichnet, daß** die Spritzwand (2) derart jeder Frontsäule (3) zugeordnet ist, daß stirnseitige Bereiche der Spritzwand (2) zumindest teilweise die U-förmige Öffnung der Frontsäule (3) überdecken und an der Frontsäule (3) derart festgelegt sind, daß der Verbund aus offenem Profil der Frontsäule (3) und stimseitigen Bereichen der Spritzwand (2) ein geschlossenes, torsions- und biegesteifes Profil bilden.

25. Karosseriestruktur nach Anspruch 1, **dadurch gekennzeichnet, daß** die Frontsäule (3) an ihrem, einem Schweller (16) zugeordneten Abschnitt einen Einsteckbereich (15) aufweist, in den der Schweller (16) einsteckbar und festlegbar ist.

## Claims

1. Body structure, in particular in the region of the front part of a motor vehicle, having at least two side members (1) which extend from the region of the front vehicle end in the direction of the rear vehicle end, a splashboard (2) for closing off an engine space (6) in relation to a passenger space (5), and also two front pillars (3) extending essentially vertically and transversely to the side members (1), **characterized in that** the side members (1) are in each case secured with their end (19) facing the rear vehicle end to a receiving element (4) on the front side of the splashboard (2), in order to transmit to the splashboard (2) a force acting essentially in the respective longitudinal direction, and **in that** a cantilever arm (12) is formed on each of the front pillars (3) and runs behind the respective receiving element (4) in relation to the rear side of the splashboard, in order to support the respective side member (1) through the splashboard (2), the force being capable of being transmitted from the splashboard (2) to the associated front pillar (3).

2. Body structure according to Claim 1, **characterized in that** the splashboard (2) at least partially covers the body structure between the front pillars (3) with a stiffening effect.

3. Body structure according to one of Claims 1 and 2, **characterized in that** the ends (19) of each side member (1) which point towards the rear vehicle end are received in the receiving elements (4).

4. Body structure according to Claim 3, **characterized in that** the receiving elements (4) receive in a form-locking manner those ends (19) of the side members (1) which point towards the rear vehicle end.

5. Body structure according to one of Claims 3 and 4, **characterized in that** the ends (19) of each side member (1) which point towards the rear vehicle end can be secured to or in the receiving elements (4) of the splashboard (2) by adhesive bonding, screwing, welding and/or the like.

6. Body structure according to one of the preceding claims, **characterized in that** the splashboard (2) is formed as a cast component, preferably from an aluminium and/or magnesium alloy.

7. Body structure according to one of the preceding claims, **characterized in that** the receiving elements (4) for the ends (19) of each side member (1) which point towards the rear vehicle end are integrally formed in one piece on the splashboard (2) during the casting of said splashboard and are preferably closed towards the passenger space (5).

8. Body structure according to one of Claims 1 to 5, **characterized in that** the splashboard (2) is produced as a sheet-metal component, preferably from an aluminium sheet profile.

9. Body structure according to one of the preceding claims, **characterized in that** a wheel house contiguous to the splashboard (2) can be produced completely or partially in one piece with said splashboard.

10. Body structure according to one of the preceding claims, **characterized in that** the splashboard (2) is formed from two essentially symmetrical half-elements (8) which are divided in the region of the middle tunnel (7) and which can be secured to one another in the region of said middle tunnel.

11. Body structure according to Claim 10, **characterized in that** the half-elements (8) can be secured releasably to one another and to contiguous parts of the body structure.

12. Body structure according to one of the preceding claims, **characterized in that** the splashboard (2) has connecting elements (9) for securing an auxiliary frame serving for the mounting of chassis components.

13. Body structure according to Claim 12, **characterized in that** the connecting elements (9) are of bracket-like design and the auxiliary frame can be secured preferably releasably to them.

14. Body structure according to one of Claims 12 and 13, **characterized in that** the connecting elements (9) are formed in the region of the lower edge of the splashboard (2).

15. Body structure according to one of Claims 6 and 7 or one of Claims 12 to 14, **characterized in that** the bracket-like connecting elements (9) are integrally formed in one piece on the splashboard (2) during the casting of said splashboard produced as a casting.

16. Body structure according to one of Claims 12 and 13, **characterized in that** the auxiliary frame can be produced as a magnesium cast component.

17. Body structure according to one of the preceding claims, **characterized in that** the front pillar (3) is designed as a U-shaped profile open in an elongate manner essentially in the direction of travel.

18. Body structure according to Claim 17, **characterized in that** the front pillar (3) is produced from a magnesium or aluminium cast alloy, preferably, a die-cast alloy.

19. Body structure according to one of Claims 17 and 18, **characterized in that** the U-shaped profile of the front pillar (3) has inner ribbings (11), preferably cross ribbings for reinforcement.

20. Body structure according to one of Claims 3 and 4 or one of Claims 17 to 19, **characterized in that** each front pillar (3) has a bracket-like cantilever arm (12) which points towards the associated receiving element (4) of the splashboard (2) for the associated side member (1) and which absorbs forces introduced into the splashboard (2) by the side member (1) and introduces said forces into the front pillar (3).

21. Body structure according to Claim 20, **characterized in that** the bracket-like cantilever arm (12) at least comes to bear in the prolongation of the side members (1), behind the splashboard (2), against the passenger-space-side surface of the splashboard (2) and supports the receiving element (4) of said splashboard.

22. Body structure according to Claim 20, **characterized in that** the bracket-like cantilever arm (12) can also be secured directly to that end (19) of the associated side member (1) which points towards the rear vehicle end.

23. Body structure according to one of Claims 20 to 22, **characterized in that** the bracket-like cantilever arm (12) is formed from a hollow profile and has an inner ribbing (13) which extends preferably into the interior of the front pillar (3).

24. Body structure according to one of the preceding claims, **characterized in that** the splashboard (2) is assigned to each front pillar (3) in such a way that end-face regions of the splashboard (2) at least partially cover the U-shaped orifice of the front pillar (3) and are secured to the front pillar (3) in such a way that the composite structure consisting of the open profile of the front pillar (3) and of the end-face regions of the splashboard (2) forms a closed torsionally and flexurally resistant profile.

25. Body structure according to Claim 1, **characterized in that** the front pillar (3) has, on its portion assigned to a sill (16), an insertion region (15), into which the sill (16) can be inserted and secured.

## Revendications

1. Structure de carrosserie, en particulier dans la région du train avant d'un véhicule automobile, présentant au moins deux longerons (1) qui s'étendent depuis la zone de l'extrémité avant du véhicule en direction de l'extrémité arrière du véhicule, un tablier d'auvent (2) pour fermer une enceinte de moteur (6) par rapport à un habitacle (5) ainsi que deux colonnes avant (3) qui s'étendent essentiellement à la verticale et transversalement par rapport aux longerons (1), **caractérisée en ce que** les longerons (1) sont chaque fois fixés par leur extrémité (19) tournée vers l'extrémité arrière du véhicule à un élément de réception (4) situé sur le côté avant du tablier d'auvent (2), pour transférer sur le tablier d'auvent (2) une force agissant essentiellement dans chaque direction longitudinale, et **en ce qu'**un bras en porte-à-faux (12) est formé sur chacune des colonnes avant (3) et s'étend vers le côté arrière du tablier d'auvent derrière chaque élément de réception (4), pour soutenir chaque longeron (1) par le tablier d'auvent (2), la force pouvant être transférée par le tablier d'auvent (2) sur la colonne avant (3) associée.

2. Structure de carrosserie selon la revendication 1, **caractérisée en ce que** le tablier d'auvent (2) recouvre au moins partiellement en la renforçant la structure de carrosserie entre les colonnes avant (3).

3. Structure de carrosserie selon l'une des revendications 1 ou 2, **caractérisée en ce que** les extrémités (19), tournées vers l'extrémité arrière du véhicule, de chaque longeron (1) sont reprises dans les éléments de réception (4).

4. Structure de carrosserie selon la revendication 3, **caractérisée en ce que** les éléments de réception (4) reçoivent en correspondance géométrique les extrémités (19), tournées vers l'extrémité arrière du véhicule, des longerons (1).

5. Structure de carrosserie selon l'une des revendications 3 ou 4, **caractérisée en ce que** les extrémités (19), tournées vers l'extrémité arrière du véhicule, de chaque longeron (1) peuvent être fixées sur ou dans les éléments de réception (4) du tablier d'auvent (2) par collage, vissage, soudage et/ou similaires.

6. Structure de carrosserie selon l'une des revendications précédentes, **caractérisée en ce que** le tablier d'auvent (2) est formé comme composant coulé, de préférence en un alliage d'aluminium et/ou de magnésium.

7. Structure de carrosserie selon l'une des revendications précédentes, **caractérisée en ce que** les éléments de réception (4) pour les extrémités (19), tournées vers l'extrémité arrière du véhicule, de chaque longeron (1), sont formées d'un seul tenant sur le tablier d'auvent (2) lors de la coulée du tablier d'auvent (2) et sont de préférence fermés en direction de l'habitacle (5).

8. Structure de carrosserie selon l'une des revendications 1 à 5, **caractérisée en ce que** le tablier d'auvent (2) est formé comme composant en tôle, de préférence en une tôle profilée d'aluminium.

9. Structure de carrosserie selon l'une des revendications précédentes, **caractérisée en ce que** le logement de roue adjacent au tablier d'auvent (2) peut être réalisé en tout ou en partie d'un seul tenant avec le tablier d'auvent (2).

10. Structure de carrosserie selon l'une des revendications précédentes, **caractérisée en ce que** le tablier d'auvent (2) est formé de deux demi-éléments (8) essentiellement symétriques divisés essentiellement dans la région du tunnel central (7) et qui peuvent être fixés l'un à l'autre dans la région du tunnel central (7).

11. Structure de carrosserie selon la revendication 10, **caractérisée en ce que** les demi-éléments (8) peuvent être fixés de manière libérable l'un à l'autre et à des parties adjacentes de la structure de carrosserie.

12. Structure de carrosserie selon l'une des revendications précédentes, **caractérisée en ce que** le tablier d'auvent (2) présente des éléments de raccordement (9) pour fixer un bâti auxiliaire servant à installer des composants du train de roulement.

13. Structure de carrosserie selon la revendication 12, **caractérisée en ce que** les éléments de raccordement (9) sont configurés en forme de console et **en ce que** le bâti auxiliaire peut y être fixé, de préférence de manière libérable.

14. Structure de carrosserie selon l'une des revendications 12 ou 13, **caractérisée en ce que** les éléments de raccordement (9) sont formés dans la région du bord inférieur du tablier d'auvent (2).

15. Structure de carrosserie selon l'une des revendications 6 ou l'une des revendications 12 à 14, **caractérisée en ce que** les éléments de raccordement (9) en forme de console sont formés d'un seul tenant sur le tablier d'auvent (2) lors de la coulée de ce dernier réalisé comme pièce coulée.

16. Structure de carrosserie selon l'une des revendications 12 ou 13, **caractérisée en ce que** le bâti auxiliaire peut être réalisé comme composant coulé en magnésium.

17. Structure de carrosserie selon l'une des revendications précédentes, **caractérisée en ce que** la colonne avant (3) est configurée comme profilé en forme de U ouvert, allongé essentiellement dans la direction du roulage.

18. Structure de carrosserie selon la revendication 17, **caractérisée en ce que** la colonne avant (3) est réalisée en un alliage de coulée de magnésium ou d'aluminium, de préférence un alliage de coulée sous pression.

19. Structure de carrosserie selon l'une des revendications 17 ou 18, **caractérisée en ce que** le profilé en forme de U de la colonne avant (3) présente pour son renforcement des nervurations intérieures (11), de préférence des nervurations en croix.

20. Structure de carrosserie selon l'une des revendications 3, 4 ou l'une des revendications 17 à 19, **caractérisée en ce que** chaque colonne avant (3) présente un bras en porte-à-faux (12) en forme de console, tourné vers l'élément de réception (4) associé du tablier d'auvent (2) pour le longeron (1) associé, qui reprend les forces transmises par le longeron (1) dans le tablier d'auvent (2) et les transfère dans la colonne avant (3).

21. Structure de carrosserie selon la revendication 20, **caractérisée en ce que** le bras en porte-à-faux (12) en forme de console vient au moins buter contre la surface tournée du tablier d'auvent (2) vers l'habitacle, dans le prolongement des longerons (1) derrière le tablier d'auvent (2), et soutient les éléments de réception (4) du tablier d'auvent (2).

22. Structure de carrosserie selon la revendication 20, **caractérisée en ce que** le bras en porte-à-faux (12) en forme de console peut également être fixé directement sur l'extrémité (19), tournée vers l'extrémité arrière du véhicule, du longeron (1) associé.

23. Structure de carrosserie selon l'une des revendications 20 à 22, **caractérisée en ce que** le bras en porte-à-faux (12) en forme de console est constitué d'un profilé creux et présente une nervuration (13) intérieure qui s'étend de. préférence jusqu'à l'intérieur de la colonne avant (3).

24. Structure de carrosserie selon l'une des revendications précédentes, **caractérisée en ce que** le tablier d'auvent (2) est associé à chaque colonne avant (3) de telle sorte que des zones situées du côté frontal de la paroi du tablier d'auvent (2) recouvrent au moins en partie l'ouverture en forme de U de la colonne avant (3) et sont fixées à la colonne avant (3) de telle sorte que l'ensemble formé du profilé ouvert de la colonne avant (3) et des zones frontales de la paroi du tablier d'auvent (2) forme un profilé fermé résistant à la torsion et à la flexion.

25. Structure de carrosserie selon la revendication 1, **caractérisée en ce que** la colonne avant (3) présente sur sa partie associée à un seuil (16) une zone d'enfichage (15) dans laquelle le seuil (16) peut être enfiché et fixé.
